# EUROPÄISCHE PATENTANMELDUNG

(11) **EP 4 729 429 A1**
(43) Veröffentlichungstag der Anmeldung: **22.04.2026**
(21) Anmeldenummer: 25208494.2
(22) Anmeldetag: 14.10.2025
(51) Int. Cl.: B65D 1/26, B32B 27/00, B32B 27/08, B65D 1/28

(54) **KUNSTSTOFFBECHER**

(30) Priorität: 18.10.2024 DE 102024003447
(71) Anmelder: Liner Factory GmbH, 48683 Ahaus (DE)
(72) Erfinder: AHLER, Franz, 48691 Vreden (DE)
(74) Vertreter: Grosse Schumacher Knauer von Hirschhausen

(57) **Zusammenfassung**

Die Erfindung betrifft einen tiefgezogenen Kunststoffbecher (4) zum Verpacken von festen oder flüssigen Klebstoffen, Lacken oder Baustoffen. Der Kunststoffbecher (4) ist aus einer coextrudierten Kunststoff-Folie (1) gebildet. Der Kunststoffbecher (4) weist innenseitig eine Funktionsschicht (3) aus einem Silizium-Polypropylen-Compound auf und außenseitig eine ein Polypropylen und ein Polypropylen-Recyclat umfassende Basisschicht (2).

## Beschreibung

Die Erfindung betrifft einen tiefgezogenen Kunststoffbecher gemäß dem Oberbegriff des Anspruchs 1. Der Kunststoffbecher dient dem Verpacken von festen oder flüssigen oder pulvrigen Klebstoffen, Lacken oder Baustoffen.

Die Erfindung betrifft ferner eine becher- oder dosenförmige Verbundverpackung gemäß dem Oberbegriff des Anspruch 8. Demnach dient die Verbundverpackung dem Verpacken von festen oder flüssigen oder pulvrigen Klebstoffen, Lacken oder Baustoffen. Die Verbundverpackung umfasst einen äußeren Verpackungsbestandteil und einen inneren Verpackungsbestanteil. Der innere Verpackungsbestandteil ist in dem äußeren Verpackungsbestandteil trennbar angeordnet. Der (flüssige oder feste) Klebstoff, der Lack oder der (flüssige/feste/pulvrige) Baustoff ist nach dem Verpacken in dem inneren Verpackungsbestandteil angeordnet.

Die Erfindung betrifft außerdem ein Verfahren gemäß Anspruch 10. Das Verfahren betrifft das Herstellen eines Kunststoffbechers zum Verpacken von festen oder flüssigen oder pulvrigen Klebstoffen, Lacken oder Baustoffen.

Schließlich betrifft die Erfindung gemäß der Anspruch 16 eine Verwendung einer hierin beschriebenen Verbundverpackung für das Verpacken eines Heißschmelzklebstoffs, eines Lacks respektive eines Baustoffs.

### TECHNOLOGISCHER HINTERGRUND

Beim Verpacken von unverträglichen, insbesondere reaktiven, Chemikalien besteht regelmäßig der technische Bedarf, dass die Chemikalie rückstandslos aus der Verpackung entnommen werden kann, sodass der Verpackungsmüll nicht oder nur in geringem Maße mit Rückständen der Chemikalie kontaminiert wird. Außerdem besteht beim Verpacken von unverträglichen, insbesondere reaktiven, Chemikalien regelmäßig der technische Bedarf, dass das Verpackungsmaterial nicht vom Verpackungsinhalt, d. h. von der Chemikalie, angegriffen oder zersetzt wird. Heißschmelzkleber, Lacke oder Baustoffe beispielsweise umfassen Chemikalien, die dazu in der Lage sind, ein Verpackungsmaterial zu kontaminieren und/oder zu zersetzen.

Es ist im Stand der Technik geläufig, Verbundverpackungen zum Verpacken von Chemikalien einzusetzen. Beispielsweise werden Heißschmelzklebstoffe in (Metall-) Dosen verpackt, die im Inneren einen Kunststoffbecher aufweisen, wobei der Kunststoffbecher aus einer mehrkomponentigen Folie gebildet ist. Eine Folienkomponente stabilisiert den Becher und zumindest eine darauf innenseitig angeordnete Folienkomponente ist als Antihaft- und/oder Barriere-Schicht gebildet. Bei der Fertigung werden die Folien respektive die Folienkomponenten zunächst miteinander kaschiert, und durch anschließendes Tiefziehen der kaschierten Folien wird ein Becher aus der mehrkomponentigen Folie geformt, der in der Dose formschlüssig anordbar ist.

Problematisch daran ist, dass die Handhabung der mehrkomponentigen Folie aufwändig ist, es müssen zwei Folien auf zwei getrennten Folienrollen beschafft, in die Tiefziehvorrichtung eingesetzt und kontrolliert darin geführt werden. Dieses Verfahren ist fehleranfällig und es kommt regelmäßig zu Herstellungs-Unterbrechungen. Hier setzt die Erfindung ein.

### DARSTELLUNG DER ERFINDUNG

Die zu lösende Aufgabe besteht darin, das Herstellen von Verbundverpackungen für Heißschmelzklebstoffe, Lacke, Baustoffe oder andere Materialien, die unverträgliche und/oder reaktive Substanzen umfassen, respektive deren Handhabung auf (ökologisch) nachhaltige Weise zu verbessern. Diese Aufgabe wird mit einem durch Tiefziehen gefertigten, respektive tiefgezogenen Kunststoffbecher gemäß Anspruch 1 gelöst. Weitere Ausgestaltungen der Erfindung ergeben sich aus den nachfolgenden Ansprüchen. Der tiefgezogene Becher ist demnach aus einer coextrudierten Kunststoff-Folie gebildet. Indem eine (Verbund- respektive Coextrusions-)Folie verwendet wird, wird das Folienhandling beim Herstellen der Verpackung erheblich vereinfacht, es bedarf keiner weiteren, zusätzlichen Folie, die (auf großen und Schweren Rollen) in die Fertigungsanlage eingesetzt werden muss. Der Kunststoffbecher respektive die coextrudierte Folie weist innenseitig eine Funktionsschicht aus einem Silizium-Polypropylen-Compound auf und außenseitig eine ein Polypropylen (PP) und ein Polypropylen-Recyclat umfassende Basisschicht. Die innenseitige Silizium-//PP-Compound-Schicht hat eine dehäsive Funktion. Indem die Basisschicht ein Recyclat, d. h. ein Material aus einem vorgeschalteten Recycling-Vorgang umfasst, ist die coextrudierte Folie in ökologischer Hinsicht spürbar nachhaltiger als eine Folie, die ausschließlich aus nicht-recyceltem Kunststoff, d. h. aus so genanntem "virgin plastic" oder aus Rohstoffen, besteht. Die Funktionsschicht ist als Antihaftschicht und/oder als Barriere-Schicht gebildet. Auf diese Weise wird sichergestellt, dass der Verpackungsinhalt (Klebstoff, Lack, etc.) beim Entleeren der Verpackung keine Rückstände bildet (Antihaft-Eigenschaft) und/oder nicht in die Basisschicht respektive in eine Umverpackung des Kunststoffbechers eindringt (Barriere-Eigenschaft der Funktionsschicht). Nach dem Entleeren des Kunststoffbechers kann dieser in der Leichtverpackungs- oder Kunststoffmüll- oder Restmüll-Fraktion entsorgt werden. Sofern eine Umverpackung des Kunststoffbechers vorgesehen ist, kann diese in der Papiermüll- oder Altmetall-Fraktion entsorgt werden.

Besonders einfach herstellbar und für die weitere Verpackungshandhabung zweckmäßig ist der eingangs beschriebene Kunststoffbecher dann, wenn der Kunststoffbecher einen runden, insbesondere kreisrunden, Becherboden aufweist und einen zylinderförmigen, insbesondere hohlzylinderförmigen, Bechermantel, wobei Becherboden und Bechermantel einstückig miteinander verbunden sind. Diese Becherform lässt sich mit geringem maschinellem Aufwand durch Tiefziehen formen und ist anschließend aus dem Tiefziehwerkzeug einfach entformbar respektive entnehmbar.

Zur Verbesserung der Entformbarkeit im Tiefziehwerkzeug oder zur Vereinfachung beim Einfügen des Kunststoffbechers in eine - becher-stabilisierende - (Metall-) Dose oder Papp-Rolle oder in einen Papp-Außenbecher kann vorgesehen sein, dass sich der Becherquerschnitt des Kunststoffbechers über die Becherhöhe verjüngt, sodass der Becher im Bodenbereich einen kleineren Querschnitt aufweist als im Bereich der Becheröffnung.

Als stabilisierende Maßnahme kann vorgesehen sein, dass im Bechermantel des Kunststoffbechers im Bereich der Becheröffnung eine, insbesondere ringförmige, Sicke, angeordnet ist. Die Sicke kann zu dem oberen Becherrand beabstandet sein, wobei der Abstand der Sicke zum Becherrand bevorzugt in einem Abstandsbereich zwischen etwa 5 mm und etwa 15 mm liegt, oder bevorzugt etwa 10 mm beträgt. Da der Kunststoffbecher aus einer vergleichsweise dünnen Folie gebildet ist, kann, insbesondere bei vergleichsweise großen oder hohen Becherformen, das Folienmaterial instabil sein, sodass der Becher stellenweise einknickt. Indem im oberen Becherbereich, das heißt näher an der Becheröffnung als an dem Becherboden, die Sicke angeordnet ist, wird ein Einknicken der Folie verhindert.

Im Hinblick auf das Handhaben des Kunststoffbechers durch den Anwender kann es zweckmäßig sein, wenn der Kunstsoff des Bechers, d. h. die Folie, durchsichtig, durchscheinend oder opak (getrübt) ist. Der Kunststoffbecher kann mit zumindest einer Becherfarbe eingefärbt sein, was beispielsweise dann vorteilhaft ist, wenn der Becher optisch bestimmten Inhalten zugeordnet sein soll. So kann ein grüner Becher für grünen Lack oder für einen ersten Klebstoff verwendet werden oder ein roter Becher für roten Lack oder einen zweiten Klebstoff, der sich vom ersten Klebstoff stofflich unterscheidet. Bevorzugt kann der Kunststoffbecher, vorzugsweise außenseitig, bedruckbar sein. Die äußere Becheroberfläche kann eine raue Oberfläche aufweisen, die innere Becheroberfläche ist im Hinblick auf die Antihafteigenschaft vorzugsweise glatt.

Ökologisch nachhaltig wird die Becher-Fertigung und/oder Entsorgung dann, wenn die Stärke der coextrudierten Folie in einem Stärkenbereich zwischen etwa 400 µm und etwa 800 µm liegt, wobei die Stärke der coextrudierten Folie vorzugsweise etwa 600 µm beträgt. Bei dieser (vergleichsweise geringen) Stärke wird (Kunststoff-)Material bei der Becherherstellung eingespart, trotzdem bleibt der Becher nach dem Entnehmen aus dem Tiefzieh-Werkzeug formstabil, was das anschließende Befüllen oder das anschließende Anordnen in einer Umverpackung, beispielsweise in einer (Weiß-)Blech-Dose, vereinfacht.

Zur optimalen Materialverteilung im Hinblick auf das Gewicht des Bechers und Becherstabilität kann vorgesehen sein, dass die Wanddicke des Bechermantels im Bereich des Becherbodens geringer ist als die Wanddicke im Bereich der Becheröffnung.

Im Hinblick auf eine angenehme Becherhaptik und -optik kann es zweckmäßig sein, wenn der Recyclat-Anteil in der Basisschicht in einem Anteilsbereich zwischen etwa 20% und etwa 50% liegt, wobei der Recyclat-Anteil vorzugsweise etwa 30% beträgt. So wird erreicht, dass Becherfarbe, Opazität (Trübung) und/oder Haptik kaum unterscheidbar sind von einem Becher, der keinen Recyclat-Anteil aufweist.

Ein Verbessern des Herstellens von Verbundverpackungen für Heißschmelzklebstoffe, Lacke, Baustoffe oder andere Materialien, die unverträgliche und/oder reaktive Substanzen umfassen, respektive ein Verbessern deren Handhabung gelingt auf (ökologisch) nachhaltige Weise auch mittels einer becher- oder dosenförmigen Verbundverpackung gemäß Anspruch 8. Die Verbundverpackung dient dem Verpacken von festen oder flüssigen Klebstoffen, Lacken oder Baustoffen, wobei die Verbundverpackung einen äußeren Verpackungsbestandteil umfasst und einen inneren Verpackungsbestanteil. Der innere Verpackungsbestandteil ist aus einem hierin beschriebenen und beanspruchten Kunststoffbecher gebildet. Bevorzugt ist der äußere Verpackungsbestandteil aus einem Metall-Blech, insbesondere Weißblech, gebildet oder aus einem Kunststoff oder aus Pappe.

Ein Verbessern des Herstellens von Verbundverpackungen für Heißschmelzklebstoffe, Lacke, Baustoffe oder andere Materialien, die unverträgliche und/oder reaktive Substanzen umfassen, respektive ein Verbessern deren Handhabung gelingt auf (ökologisch) nachhaltige Weise auch mittels einem Herstellungsverfahren gemäß Anspruch 10. Das Verfahren dient dem Herstellen eines, insbesondere hierin beschriebenen und beanspruchten, Kunststoffbechers zum Verpacken von festen oder flüssigen oder pulvrigen Klebstoffen, Lacken oder Baustoffen, wobei das Verfahren folgende Schritte umfasst: In einem ersten Schritt ist ein Coextrudieren einer Folie vorgesehen. Dabei wird aus einem ersten Extrudat, eine Basisschicht der Folie gebildet, wobei das Extrudat Polypropylen und ein Polypropylen-Recyclat umfasst oder daraus gebildet ist. Aus einem zweiten Extrudat wird eine Funktionsschicht der (Verbund- respektive Coextrusions-)Folie gebildet, wobei das Extrudat einen Polypropylen-Silizium-Compound umfasst oder daraus gebildet ist. Gemäß einem weiteren, beispielsweise anschließenden, Verfahrensschritt ist ein Tiefziehen der Folie zu einem im Wesentlichen hohlzylindrisch geformten Kunststoffbecher vorgesehen, wobei die die Funktionsschicht die Innenseite des Kunststoffbechers bildet und die Basisschicht die Außenseite des Kunststoffbechers. Gemäß einem weiteren, beispielsweise anschließenden, Verfahrensschritt ist das Entformen und/oder Beschneiden des tiefgezogenen Bechers aus einem Tiefziehwerkzeug vorgesehen.

Bevorzugt kann die Folie durchsichtig, durchscheinend oder opak (getrübt) gebildet werden. Es kann auch vorgesehen sein, dass die Folie eingefärbt wird.

Zur Verbesserung der Stabilität des Bechers im Bereich der Becheröffnung und zur Vermeidung eines Einknickens des Bechers bei der (Klebstoff-Heiß-)Befüllung kann vorgesehen sein, dass im Bechermantel des Kunststoffbechers im Bereich der Becheröffnung eine, insbesondere ringförmige, Sicke, angeordnet wird, wobei die Sicke vorzugsweise zu dem oberen Becherrand beabstandet ist, wobei der Abstand der Sicke zum Becherrand vorzugsweise in einem Abstandsbereich zwischen etwa 5 mm und etwa 15 mm liegt, oder bevorzugt etwa 10 mm beträgt. Die Sicke kann beispielsweise mittels einer Hinterschneidung gebildet werden.

Zur Optimierung der Formstabilität bei gleichzeitig geringem Materialbedarf kann es zweckmäßig sein, wenn die Folie so coextrudiert wird, dass die Stärke der Folie in einem Stärkenbereich zwischen etwa 400 µm und etwa 800 µm liegt, wobei die Stärke der Folie vorzugsweise etwa 600 µm beträgt. Gemäß einer bevorzugten Verfahrensvariante kann die Folie beispielsweise außenseitig, d. h. auf der Basisschicht bedruckt werden.

Damit der befüllte Kunststoffbecher auf sichere und stabile Weise zum Anwender gelangt, kann vorgesehen sein, dass der Kunststoffbecher in einer Umverpackung angeordnet wird, wobei die Umverpackung aus einem Metall-Blech, insbesondere Weißblech, gebildet ist oder aus einem Kunststoff oder aus Pappe. Der Anwender kann nach dem Entleeren der Verpackung, d. h. nach der Entnahme des Verpackungsinhalts, den Kunststoffbecher und die Umverpackung trennen, und anschließen unterschiedlichen Müll-Fraktionen zuführen. Beispielsweise kann der leere (entleerte) Kunststoffbecher mit anderen Leichtverpackungen (Duales System, "Gelbe Tonne", etc.) entsorgt werden oder mit dem Restmüll, wohingegen die Umverpackung mit dem Papiermüll oder mit dem Altmetall entsorgt werden kann. In ökologischer Hinsicht bildet die hierein beschriebene Verbundverpackung eine mit sparsamem Materialaufwand respektive -einsatz herstellbare und nach Verwendung trennbare und nachhaltig entsorgbare Verpackung, in der kaum Rückstände des Verpackungsinhalts zurückbleiben.

Ein Verbessern des Herstellens von Verbundverpackungen für Heißschmelzklebstoffe, Lacke, Baustoffe oder andere Materialien, die unverträgliche und/oder reaktive Substanzen umfassen, respektive ein Verbessern deren Handhabung gelingt auf (ökologisch) nachhaltige Weise auch mittels einer Verbundverpackungs-Verwendung gemäß Anspruch 16. Demnach wird eine hierein beschriebene und beanspruchte Verbundverpackung für das Verpacken eines Heißschmelzklebstoffs zum klebenden Verbinden von Materialien oder Werkstücken verwendet. Indem der Innere Kunststoffbecher formstabil ist, gelingt dem Klebstoffhersteller auf einfache und sichere Weise ein Anordnen des Kunststoffbechers in dem äußeren Verpackungsbestandteil. Das Befüllen des Kunststoffbechers wird ebenfalls vereinfacht, insbesondere da der innere Kunststoffbecher formstabil ist. Die Funktionsschicht mit Antihaft-Eigenschaft ermöglicht für den Klebstoffanwender das nahezu rückstandlose Entleeren des inneren Kunststoffbechers. Der Klebstoffanwender kann die Verbundverpackung in ihre Verpackungsbestandteile trennen und den inneren Kunststoffbecher in der Kunststoff-Müll-Fraktion entsorgen und den äußeren Verpackungsbestandteil beispielsweise in der Papiermüll-Fraktion oder in der Altmetall-Fraktion. Die Funktionsschicht bildet außerdem eine Barriere-Schicht für reaktive Klebstoff-Komponenten, was ein Zersetzen oder Durchdringen der Basisschicht verhindert.

Ein Verbessern des Herstellens von Verbundverpackungen für Heißschmelzklebstoffe, Lacke, Baustoffe oder andere Materialien, die unverträgliche und/oder reaktive Substanzen umfassen, respektive ein Verbessern deren Handhabung gelingt auf (ökologisch) nachhaltige Weise auch mittels einer Verbundverpackungs-Verwendung gemäß Anspruch 16. Demnach wird eine hierin beschriebene und beanspruchte Verbundverpackung für das Verpacken eines Lacks zum Lackieren von Materialien oder Werkstücken verwendet.

Ein Verbessern des Herstellens von Verbundverpackungen für Heißschmelzklebstoffe, Lacke, Baustoffe oder andere Materialien, die unverträgliche und/oder reaktive Substanzen umfassen, respektive ein Verbessern deren Handhabung gelingt auf (ökologisch) nachhaltige Weise auch mittels einer Verbundverpackungs-Verwendung gemäß Anspruch 16. Demnach wird eine hierin beschriebene und beanspruchte Verbundverpackung für das Verpacken eines Baustoffs zum Verarbeiten beim Handhaben von Materialien oder Werkstücken verwendet.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel eines Aufbaus einer coextrudierten Folie für einen Kunststoffbecher schematisch dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigen
- Fig. 1: eine coextrudierte Folie in schematischer Schnittansicht und
- Fig. 2: einen Kunststoffbecher in schematischer Schnittansicht.

### DETAILLIERTE BESCHREIBUNG VON AUSFÜHRUNGSBEISPIELEN

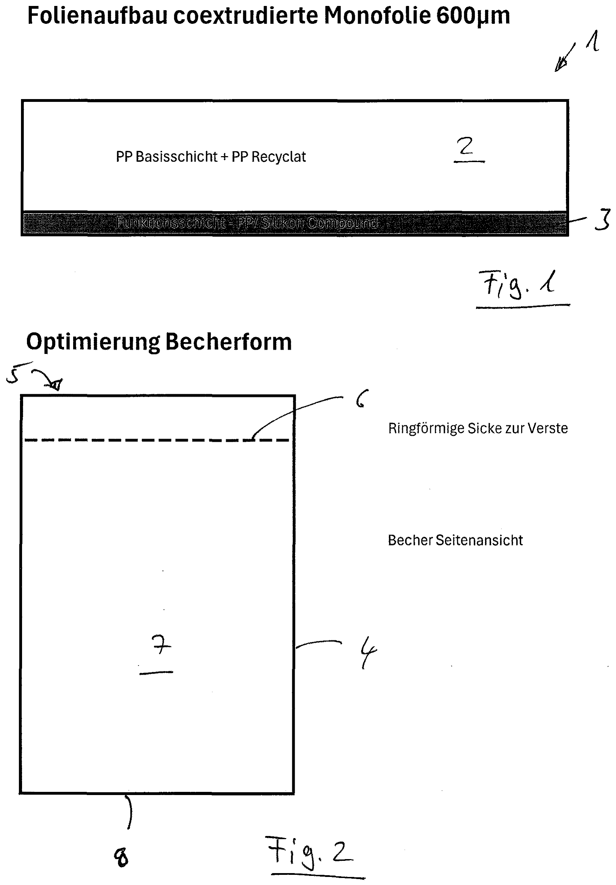

Eine schematische Ansicht des Schichtaufbaus einer (Verbund- respektive Coextrusions-)Folie 1 ist in Fig. 1 dargestellt. Durch Coextrusion zweier Extrudate wird eine Folie 1 gebildet, die eine Basisschicht 2 und eine Funktionsschicht 3 umfasst. Die Basisschicht 2 umfasst Polypropylen (PP) mit einem Recyclat-Anteil von beispielsweise 30% oder mit einem höheren Anteil. Die Funktionsschicht 2 umfasst einen Silizium-Polypropylen-Compound (Si-PP-Compound).

Das Polypropylen und der Compound werden in granularer Form in einen (2-Komonenten-)Extruder gegeben, dort erhitzt, zu einer Folie 1 coextrudiert und auf eine (Transport-)Rolle aufgebracht. Die Folienrolle wird in einer Tiefziehvorrichtung weiterverarbeitet. In der Tiefziehvorrichtung wird die Folie 1 erhitzt und zu einem hohlzylinderförmigen Kunststoffbecher 4 geformt. Der Becher 4 wird aus der Tiefziehvorrichtung entformt, ggf. randseitig beschnitten und in Stapeln verpackt. Der Becher 4 ist in eine Umverpackung einsetzbar, beispielsweise in eine Weißblechdose. Das innere Volumen der Weißblechdose entspricht (nahezu) dem äußeren Volumen des Kunststoffbechers 4, der Becher 4 ist formschlüssig in der Dose anordbar.

Der Kunststoffbecher hat innenseitig eine Funktionsschicht aus dem Si-/PP-Compond. Die Si-/PP-/Compound-Schicht wirkt dehäsiv, d. h. alle oder nahezu alle Heißschmelz-Klebstoffe, die in den Becher zu Verpackungszecken eingefüllt werden, können rückstandslos oder nahezu rückstandslos aus dem Becher entnommen werden. Dies ist in ökologischer Hinsicht zunehmend wichtig, weil so die Becher-Entsorgung sortenrein oder nahezu sortenrein erfolgen kann.

Die Schichtdicke der coextrudierten Folie 1 beträgt etwa 600 µm. Insofern ist die Becherwand 7 vergleichsweise dünn, sodass der Becher 4 beim Befüllen, beispielsweise bei einer Heißbefüllung mit einem Heißschmelzklebstoff, seine Form ändern würde. Das wird durch die Becher-Umverpackung vermieden, in der Umverpackung (Dose) behält der Kunststoffbecher 4 seine (hohlzylindrische) Form.

Damit die vergleichsweise dünne Becherwand 7 beim (Heiß-)Befüllen nicht einknickt ist im oberen Bereich des Bechers 4, etwa 5 mm zur Becheröffnung 5 beabstandet, eine Sicke 6 angeordnet. Die Sicke 6 ist in Fig. 2 gezeigt, die einen Vertikalschnitt durch den Becher 4 schematisch darstellt. Der Bechermantel respektive die Becherwand (7) und der Becherboden 8 sind aus der coextrudierten Folie 1 gemäß Fig. 1 gebildet. Die Funktionsschicht 3 der Folie 1 ist innenseitig angeordnet, die Basisschicht 2 befindet sich an der Becheraußenseite. Die Sicke 6 ist ringförmig und stabilisiert die Becherwand 7 und bildet dort, wo die Becherstruktur am schwächsten ist, nämlich im Bereich der Becheröffnung 5, eine Becherwand-Bewehrung. Die Sicke 6 wird beim Tiefziehen in der Folie 1 angeordnet. Die Sicke 6 kann eine Auswölbung der Folie 1 nach innen und/oder nach außen umfassen oder daraus gebildet sein. Indem die Becherwand 7 im Bereich der Becheröffnung 5 bewehrt wird, lässt sich der Becher 4 nach dem Anordnen in der Umverpackung (Dose) einfacher und sicherer befüllen. Insbesondere bei Heißschmelzklebstoffen ist dies nicht unwichtig, weil dadurch vermieden wird, dass beim Befüllen Klebstoff wischen Becher 4 und Umverpackung gelangt, was sowohl die Becheraußenseite (Basisschicht 2) als auch die Innenseite der Umverpackung/Dose mit dem Klebstoff kontaminieren würde.

### BEZUGSZEICHENLISTE

- 1: (Verbund-/Coextrusions-)Folie
- 2: Basisschicht
- 3: Funktionsschicht
- 4: Becher
- 5: Becheröffnung
- 6: Sicke
- 7: Becherwand / Bechermantel
- 8: Becherboden

## Patentansprüche

1. Tiefgezogener Kunststoffbecher (4) zum Verpacken von festen oder flüssigen Klebstoffen, Lacken oder Baustoffen, **dadurch gekennzeichnet,**
**dass** der Kunststoffbecher (4) aus einer coextrudierten Kunststoff-Folie (1) gebildet ist,
**dass** der Kunststoffbecher (4) innenseitig eine Funktionsschicht (3) aus einem Silizium-Polypropylen-Compound aufweist, und
**dass** der Kunststoffbecher (4) außenseitig eine ein Polypropylen und ein Polypropylen-Recyclat umfassende Basisschicht (2) aufweist.

2. Kunststoffbecher (4) nach Anspruch 1, **dadurch gekennzeichnet, dass** der Kunststoffbecher (4) einen runden, insbesondere kreisrunden, Becherboden (8) aufweist und einen zylinderförmigen, insbesondere hohlzylinderförmigen, Bechermantel (7), wobei Becherboden (8) und Bechermantel (7) einstückig miteinander verbunden sind, wobei sich der Becherquerschnitt des Kunststoffbechers (4) über die Becherhöhe vorzugsweise verjüngt, sodass der Becher (4) im Bodenbereich vorzugsweise einen kleineren Querschnitt aufweist als im Bereich der Becheröffnung (5).

3. Kunststoffbecher (4) nach Anspruch 2, **dadurch gekennzeichnet, dass** im Bechermantel (7) im Bereich der Becheröffnung (5) eine, insbesondere ringförmige, Sicke (6), angeordnet ist, wobei die Sicke (6) zu dem oberen Becherrand vorzugsweise beabstandet ist, wobei der Abstand der Sicke (6) zum Becherrand bevorzugt in einem Abstandsbereich zwischen etwa 5 mm und etwa 15 mm liegt, oder bevorzugt etwa 10 mm beträgt.

4. Kunststoffbecher (4) nach einem der Ansprüche 1 bis 3, **dadurch gekennzeichnet,**
**dass** der Kunstsoff des Bechers (4) durchsichtig, durchscheinend oder opak ist, und/oder
**dass** der Kunststoffbecher (4) mit zumindest einer Becherfarbe eingefärbt ist und/oder
**dass** der Kunststoffbecher (4), vorzugsweise außenseitig, bedruckbar ist.

5. Kunststoffbecher (4) nach einem der Ansprüche 1 bis 4, **dadurch gekennzeichnet, dass** die Stärke der coextrudierten Folie (1) in einem Stärkenbereich zwischen etwa 400 µm und etwa 800 µm liegt, wobei die Stärke der coextrudierten Folie (1) vorzugsweise etwa 600 µm beträgt.

6. Kunststoffbecher (4) nach einem der Ansprüche 1 bis 5, **dadurch gekennzeichnet, dass** die Wanddicke des Bechermantels (7) im Bereich des Becherbodens (8) geringer ist als die Wanddicke im Bereich der Becheröffnung (5).

7. Kunststoffbecher (4) nach einem der Ansprüche 1 bis 6, **dadurch gekennzeichnet, dass** der Recyclat-Anteil in der Basisschicht (2) in einem Anteilsbereich zwischen etwa 20% und etwa 50% liegt, wobei der Anteil vorzugsweise etwa 30% beträgt.

8. Becher- oder dosenförmige Verbundverpackung zum Verpacken von festen oder flüssigen Klebstoffen, Lacken oder Baustoffen, wobei die Verbundverpackung einen äußeren Verpackungsbestandteil umfasst und einen inneren Verpackungsbestanteil, **dadurch gekennzeichnet, dass** der innere Verpackungsbestandteil aus einem Kunststoffbecher (4) nach einem der Ansprüche 1 bis 7 gebildet ist.

9. Verbundverpackung nach Anspruch 8, **dadurch gekennzeichnet, dass** der äußere Verpackungsbestandteil aus einem Metall-Blech, insbesondere Weißblech, gebildet ist oder aus einem Kunststoff oder aus Pappe.

10. Verfahren zum Herstellen eines Kunststoffbechers zum Verpacken von festen oder flüssigen Klebstoffen, Lacken oder Baustoffen, insbesondere eines Kunststoffbechers nach einem der Ansprüche 1 bis 7, wobei das Verfahren umfasst:
das Coextrudieren einer Folie aus einem ersten Extrudat, welches eine Basisschicht der Folie bildet, und welches Polypropylen und ein Polypropylen-Recyclat umfasst oder daraus gebildet ist, und aus einem zweiten Extrudat, welches eine Funktionsschicht der Folie bildet, und welches ein Polypropylen-Silizium-Compound umfasst oder daraus gebildet ist;
das Tiefziehen der Folie zu einem im Wesentlichen hohlzylindrisch geformten Kunststoffbecher, wobei die die Funktionsschicht die Innenseite des Kunststoffbechers bildet und die Basisschicht die Außenseite des Kunststoffbechers; und
das Entformen und/oder Beschneiden des tiefgezogenen Bechers aus einem Tiefziehwerkzeug.

11. Herstellungsverfahren nach Anspruch 10, wobei die Folie durchsichtig, durchscheinend oder opak gebildet wird, und/oder wobei die Folie eingefärbt wird.

12. Herstellungsverfahren nach Anspruch 10 oder 11, wobei im Bechermantel des Kunststoffbechers im Bereich der Becheröffnung eine, insbesondere ringförmige, Sicke, angeordnet wird, wobei die Sicke vorzugsweise zu dem oberen Becherrand beabstandet ist, wobei der Abstand der Sicke zum Becherrand vorzugsweise in einem Abstandsbereich zwischen etwa 5 mm und etwa 15 mm liegt, oder bevorzugt etwa 10 mm beträgt.

13. Herstellungsverfahren nach einem der Ansprüche 10 bis 12, wobei die Folie so coextrudiert wird, dass die Stärke der Folie in einem Stärkenbereich zwischen etwa 400 µm und etwa 800 µm liegt, wobei die Stärke der Folie vorzugsweise etwa 600 µm beträgt.

14. Herstellungsverfahren nach einem der Ansprüche 10 bis 13, wobei die Folie bedruckt wird.

15. Herstellungsverfahren nach einem der Ansprüche 10 bis 14, wobei der Kunststoffbecher in einer Umverpackung angeordnet wird, wobei die Umverpackung aus einem Metall-Blech, insbesondere Weißblech, gebildet ist oder aus einem Kunststoff oder aus Pappe.

16. Verwendung einer Verbundverpackung gemäß Anspruch 8 oder 9 für das Verpacken eines Heißschmelzklebstoffs zum klebenden Verbinden von Materialien oder Werkstücken, oder für das Verpacken eines Lacks zum Lackieren von Materialien oder Werkstücken, oder für das Verpacken eines Baustoffs zum Verarbeiten beim Handhaben von Materialien oder Werkstücken.
